(19) Europäisches Patentamt
European Patent Office
Office européen des brevets

(11) EP 1 446 451 B1

(12) EUROPEAN PATENT SPECIFICATION

(45) Date of publication and mention of the grant of the patent:
**24.05.2006 Bulletin 2006/21**

(21) Application number: **02781893.9**

(22) Date of filing: **27.09.2002**

(51) Int Cl.:
*C08L 59/04* (2006.01) *C08K 5/35* (2006.01)
*C08K 3/22* (2006.01) *C08K 13/02* (2006.01)
*C08K 5/00* (2006.01) *C08L 59/00* (2006.01)

(86) International application number:
**PCT/KR2002/001821**

(87) International publication number:
**WO 2003/027177 (03.04.2003 Gazette 2003/14)**

# (54) POLYACETAL RESIN COMPOSITION STABLE TO CHLORINE AND CHLORIDES AND ARCICLE PREPARED THEREFROM

GEGENÜBER CHLOR UND CHLORIDEN STABILE POLYACETALHARZZUSAMMENSETZUNG UND DARAUS HERGESTELLTER ARTIKEL

COMPOSITION DE RESINE DE POLYACETAL STABLE VIS-A-VIS DU CHLORE ET DES CHLORURES ET ARTICLES PREPARES A PARTIR D'UNE TELLE COMPOSITION

(84) Designated Contracting States:
**AT BE BG CH CY CZ DE DK EE ES FI FR GB GR IE IT LI LU MC NL PT SE SK TR**

(30) Priority: **27.09.2001 KR 2001060096**

(43) Date of publication of application:
**18.08.2004 Bulletin 2004/34**

(73) Proprietor: **Korea Engineering Plastics Co., Ltd**
**121-805 Seoul (KR)**

(72) Inventors:
- **KIM, Tak-Kyu**
  **435-047 Gunpo, Gyeonggi (KR)**
- **JEONG, Chung-Ryol**
  **Dongan-gu,**
  **431-060 Anyang,**
  **Gyeonggi (KR)**
- **SHIN, Ki-Chul**
  **435-857 Gunpo, Gyeonggi (KR)**

(74) Representative: **Larcher, Dominique**
**Cabinet Vidon,**
**16 B, rue Jouanet,**
**B.P. 90333,**
**Technopole Atalante**
**35703 Rennes Cédex 7 (FR)**

(56) References cited:
**EP-A- 0 580 872**
**EP-A- 0 884 362**
**JP-A- 7 118 496**
**KR-A- 92 016 536**
**KR-A- 2000 062 354**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 446 451 B1

## Description

The present invention relates to polyacetal resin compositions stable to chlorine and chlorides, and articles prepared therefrom. More specifically, the present invention is directed to a polyacetal resin composition stable to a chlorine-based sterilizing agent and tap water sterilized and treated with chlorine or chlorides, and an article prepared from such a composition having excellent durability even though coming in direct contact with such chlorine-based sterilizing agent and tap water.

Polyacetal resins, which are excellent in mechanical properties and have superior resistance to creep, fatigue and wear, are typically applied as engineering plastics mainly for various electric or electronic appliances, automobile parts and general merchandise. In recent years, application ranges thereof have gradually widened.

Particularly, polyacetal resins are used for bathroom fixtures, sprinklers, conveyer belts and the like, each of which is exposed to tap water or a chlorine-based sterilizing agent. In the case where an article manufactured from polyoxymethylene comes in contact with such tap water or sterilizing agent, the article should be frequently replaced with a new one due to decomposition of polyoxymethylene. For this reason, there has been a need for improving chlorine resistance in polyoxymethylene compounds. That is to say, when any article prepared from polyoxymethylene is in contact with tap water for a long time, the polyoxymethylene is decomposed by the chlorine or chlorides used as tap water sterilizing agents. Further, the chlorine component lowers mechanical properties of the polyoxymethylene, thereby deteriorating functions of the polyoxymethylene articles.

In this regard, Japanese Patent Laid-open Nos. Hei. 3-290459 and 7-150005 disclose a method of improving chlorine resistance of polyoxymethylene by adding hydrotalcite and zinc compounds to the polyacetal resin, thus simply chelating (inactivating) chlorine or chlorides. Further, as efforts to increase chlorine resistance of polyoxymethylene, there are reported Korean Patent No. 142504, in which zinc compounds are added to the polyacetal resin, and Japanese Patent Laid-open No. Hei. 8-100102, in which zinc compounds and organic compounds such as tetrachloroisophthalonitrile are added to the polyacetal resin.

Through the above-mentioned techniques, polyoxymethylene may be improved in chlorine resistance for a short time by inactivating exogenous chlorine or chlorides. However, the polyoxymethylene is subjected to significant decrease in resistance to chlorine when the chlorine is adsorbed beyond the limited level. In addition, the used hydrotalcite component is in a salt form, and may cause bubbling problems upon processing the hydrotalcite-added polyoxymethylene. Further, such methods are restricted since the polyoxymethylene may be discolored depending on processing methods.

In Japanese Patent Laid-open No. Sho. 57-102943, there is disclosed a stabilized oxymethylene copolymer by use of a stabilizer comprising an initial polycondensed product of amino resin, a hindered phenol and a metal-containing compound such as alkali metal or alkali earth metal hydroxide. However, there is disclosed neither the improvement of chlorine resistance nor the use of the metal oxide.

Leading to the present invention, the intensive and thorough research into improvement of chlorine resistance of polyacetal resins, carried out by the present inventors aiming to solve the problems encountered in the prior arts, resulted in the finding that a metal hydroxide and a metal oxide are added to a polyacetal resin, whereby the decomposition of polyoxymethylene by chlorine can be prevented with inhibition of acidolysis induced by chlorine through inactivation and deacidification of chlorine, and the bubbling due to conventionally used hydrotalcite is avoided, thus increasing chlorine resistance of the polyacetal resin.

Therefore, it is an object of the present invention to provide a polyacetal resin composition, which is advantageous in terms of no bubbling, excellent thermal stability, preparation by various processing methods, and having the desired chlorine resistance even though articles prepared from the above resin composition are in contact with chlorines or chlorine-containing compounds for a long time.

It is another object of the present invention to provide an article prepared from such a polyacetal resin composition.

In accordance with a first aspect of the present invention, there is provided a polyacetal resin composition, comprising 100 parts by weight of a polyoxymethylene homopolymer or copolymer; 0.01-1.0 parts by weight of an antioxidant; 0.01-1.0 parts by weight of a thermal stabilizer; 0.01-10.0 parts by weight of a metal hydroxide selected from the group consisting of magnesium hydroxide, calcium hydroxide, barium hydroxide, cadmium hydroxide, aluminum hydroxide and combinations thereof; and 0.01-5.0 parts by weight of a metal oxide selected from the group consisting of synthetic aluminum silicate, calcium oxide, magnesium oxide, aluminum oxide and magnesium aluminate.

In accordance with a second aspect of the present invention, there is provided an article prepared from the polyacetal resin composition, for use in articles coming in direct contact with a chlorine-based sterilizing agent or tap water containing chlorine or chlorides.

In accordance with the present invention, the polyacetal resin (A) used as a main component is a polyoxymethylene homopolymer having a repeat unit represented by the following Formula 1 or a random copolymer having a monomeric unit of the Formula 1 and a monomeric unit represented by the following Formula 2:

Formula 1

$$-(CH_2O)-$$

Formula 2

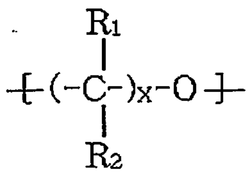

Wherein $R_1$ and $R_2$, which are the same or different, each represents hydrogen, alkyl groups and aryl groups, and x represents an integer of 2-6.

The polyoxymethylene copolymer is obtained by polymerization performed in the presence of known anionic or cationic catalysts. The polymerization catalyst of trioxane (trimer of formaldehyde) is exemplified by halogens, such as chlorine, bromine or iodine; organic and inorganic acids, such as alkyl or allyl sulfonic acid, $HClO_4$, $HIO_4$, $HClO_4$ derivatives, $CPh_3C(IO_4)$, $R_3SiHSO_4$, etc.; metal halides, such as $BF_3$, $SbF_3$, $SnCl_4$, $-TiCl_4$, $FeCl_3$, $ZrCl_4$, $MoCl_5$, $SiF_4$, etc.; complexes of metal halides, such as $BF_3 \cdot OH_2$, $BF_3 \cdot OEt_2$, $BF_3 \cdot CH_3COOH$, $BF_3 \cdot PF_5 \cdot HF$, $BF_3$-10-hydroxyacetophenol, $Ph_3CSnCl_5$, $Ph_3CBF_4$, $Ph_3CSbCl_6$, etc.; metal esters, such as carboxylates of copper, zinc, cadmium, iron, cobalt or nickel; $P_2O_5 + SO_2$, $P_2O_5$ + phosphate ester, etc.; and combinations of organic metals and metal halides. Among them, it is preferred that coordinated compounds of boron trifluoride are used.

An antioxidant (B) used in the present invention includes hindered phenols, for example, 2,2'-methylenebis(4-methyl-6-t-butylphenol), hexamethyleneglycol-bis-(3,5-di-t-butyl-4-hydroxyhydrocinnamate), tetrakis [methylene(3,5-di-t-butyl-4-hydroxyhydrocinnamate)]methane, triethyleneglycol-bis-3-(3-t-butyl-4-hydroxy-5-methylphenyl) propionate, 1,3,5-trimethyl-2,4,6-tris(3,5-di-t-butyl-4-hydroxybenzyl)benzene, n-octadecyl-3-(4'-hydroxy-3',5'-di-t-butylphenol)propionate, 4,4'-methylenebis(2,6-di-t-butylphenol), 4,4'-butylidene-bis-(6-t-butyl-3-methyl-phenol), di-stearyl 3,5-di-t-butyl-4-hydroxybenzylphosphate, 2-t-butyl-6-(3-t-butyl-5-methyl-2-hydroxybenzyl)-4-methylphenylacrylate, 3,9-bis2-[3-(3-t-butyl-4-hydroxy-5-methylphenyl)propionyloxy]-1,1-dimethylethyl-2,4,8,10-tetraoxaspiro[5,5]undecane, etc.; or hindered amines, for example, 4-acetoxy-2,2,6,6-tetramethylpiperidine, 4-stearoyloxy-2,2,6,6-tetramethylpiperidine, 4-acrylooxy-2,2,6,6-tetramethylpiperidine, 4-methoxy-2,2,6,6-tetramethylpiperidine, 4-benzoyloxy-2,2,6,6-tetramethylpiperidine, 4-cyclohexyloxy-2,2,6,6-tetramethylpiperidine, 4-phenoxy-2,2,6,6-tetramethylpiperidine, 4-benzyloxy-2,2,6,6-tetramethylpiperidine, 4-(phenylcarbamoyloxy)-2,2,6,6-tetramethylpiperidine, bis(2,2,6,6-tetramethyl-4-piperidyl)oxalate, bis (2,2,6,6-tetramethyl-4-piperidyl)alonate, bis(2,2,6,6-tetramethyl-4-piperidyl)adipate, bis(2,2,6,6-tetramethyl-4-piperidyl) sepacate, bis(1,2,2,6,6-pentamethyl-piperidyl)sepacate, bis(2,2,6,6-tetramethyl-4-piperidyl)terephthalate, 1,2-bis (2,2,6,6-tetramethyl-4-piperidyloxy)ethane, bis(2,2,6,6-tetramethyl-4-piperidyl)hexamethylene-1,6-dicarbamate, bis(1-methyl-2,2,6,6-tetramethyl-4-piperidyl)adipate, tris(2,2,6,6-tetramethyl-4-piperidyl)benzene-1,3,5-tricarboxylate, etc. Among them, triethyleneglycol-bis-3-(3-t-butyl-4-hydroxy-5-methylphenyl)-propionate, 1,6-hexane-diol-bis-3(3,5-di-t-butyl-4-hydroxy-phenyl)propionate, or tetrakis[methylene(3,5-di-t-butyl-4-hydroxyhydrocinnamate)] methane is preferably used. More preferably, triethyleneglycol-bis-3-(3-t-butyl-4-hydroxy-5-methylphenyl)-propionate is used. Such an antioxidant (B) is used in the amount of 0.01-1.0 parts by weight, and preferably in the amount of 0.1-0.5 parts by weight, on the basis of 100 parts by weight of the polyacetal resin (A).

A thermal stabilizer (C) used in the present invention is exemplified by nitrogen-containing compounds which serve to increase thermal stability of polyoxymethylene by reaction with formaldehyde, for instance, 6-phenyl-1,3,5-triazine-2,4-triamine (benzoguanamine), 2,4,6-triamino-1,3,5-triazine (melamine), carbonyldiamide (urea), dicyandiamide, isophthalic dihydrazide (hydrazine); or alcohols, for instance, polyethyleneglycol, ethylene-vinylalcohol copolymer, sorbitol, sorbitan, etc. In particular, 2,4,6-triamino-1,3,5-triazine (melamine) is preferably used. The thermal stabilizer (C) of polyoxymethylene is used in the amount of 0.01-1.0 parts by weight, and preferably in the amount of 0.1-0.5 parts by weight, on the basis of 100 parts by weight of the polyacetal resin (A).

Further, a metal hydroxide (D) functioning as a chlorine-inactivating agent (chelate compound) in the present invention is selected from the group consisting of magnesium hydroxide, calcium hydroxide; barium hydroxide, cadmium hydroxide, aluminum hydroxide and combinations thereof. Among them, magnesium hydroxide is preferable in terms of the stability and the suppression of discoloration. The metal hydroxide is used in the amount of 0.01-10.0 parts by

weight, and preferably in the amount of 0.05-1.0 parts by weight, on the basis of 100 parts by weight of the polyacetal resin (A). In the case that the amount of metal hydroxide is less than 0.01 parts by weight, an addition effect of this component is hardly exhibited. Meanwhile, if the amount exceeds 10.0 parts by weight, the thermal stability of polyacetal has a tendency of being decreased.

According to the present invention, the metal hydroxide is present in polyoxymethylene, and serves to inactivate a chlorine component upon the penetration of the chlorine or chlorides into polyoxymethylene, thus increasing the chlorine resistance of polyoxymethylene. In particular, magnesium hydroxide is not washed with water, which stems from the water-insoluble tendency, and is not independently converted to magnesium carbonate; thereby exhibiting its chlorine inactivation effect for a long time.

Furthermore, in addition to the chlorine-inactivating agent, a metal oxide (E) is used for deacidification of acidolysis derivatives formed by chlorine. Examples of the metal oxide are synthetic aluminum silicate, calcium oxide, magnesium oxide, aluminum oxide and magnesium aluminate. Among them, magnesium oxide or magnesium aluminate is preferably used. In particular, magnesium aluminate is more preferable. The metal oxide (E) is used in the amount of 0.01-5.0 parts by weight, and preferably in the amount of 0.05-1.0 parts by weight, on the basis of 100 parts by weight of the polyacetal resin (A). If the metal oxide is used in the amount less than 0.01 parts by weight, this component does not exhibit functions thereof even though being added. On the other hand, if the above component is used in the amount exceeding 5.0 parts by weight, the polyacetal resin composition is decreased in its thermal stability.

In the present invention, since the metal oxide is used in a dehydrated form, bubbling problems of polyacetal resin composition may be overcome. Also, the above metal oxide functions to eliminate formic acid generated or present in polyacetal resin composition, thus increasing thermal stability of polyacetal resin composition as well as providing the composition with stability to chlorides.

An organic additive (F) is used for further increasing chlorine resistance. The organic additive is exemplified by alkylene bis-stearamide or hot melt nylon resin, and used in the amount of 0.01-1.0 parts by weight, on the basis of 100 parts by weight of the polyacetal resin (A). In particular, ethylene bis-stearamide, is preferably used. According to the prior art references, the amide groups of ethylene bis-stearamide are reported to serve to increase thermal stability of polyacetal compositions. However, the present inventors have noted that the above component may increase the chlorine resistance of the polyacetal composition by reacting with the residual chlorine to be converted into monochloroamine.

Meanwhile, the stabilized polyacetal resin composition according to the present invention may be prepared by use of any conventional devices employable for heat-melting stabilization. Examples of such a device are a single-screw extruder equipped with single discharge port, a twin-screw extruder equipped with a multi-stage discharge port, and a twin-shaft paddle type continuous mixing extruder. An exemplified embodiment of the stabilization is as follows:

Each component of the present composition is mixed with common additives such as a polymerization stabilizing agent. Thereafter, the mixture is processed by the above device under the addition of a chlorine stabilizing agent at the temperature (160-250 °C), which is higher than a melting point of polyoxymethylene, under reduced pressure of 150-400 torr, followed by being subjected to drying at 80 °C for 2-10 hours for post-treatment. In this regard, if the pressure and drying conditions fall outside of the above ranges, terminal moieties of polyoxymethylene may become increasingly unstable, thus decreasing chlorine resistance of polyoxymethylene.

By using the conventional process, the composition of the present invention may be molded into articles for application involving direct contact with a chlorine-based sterilizing agent or tap water containing chlorine or chlorides, for example, bathroom fixtures, sprinklers, conveyer belts, piping materials, containers, bib cocks, showerheads, swimming pool cleaners, etc.

A better understanding of the present invention may be obtained in light of the following examples which are set forth to illustrate, but are not to be construed to limit the present invention.

Hereinafter, chlorine resistance and thermal stability of a resin are measured as follows.

(1) Maintenance ratio of tensile strength (chlorine resistance)

A polyacetal resin composition was injected to a ASTM 1 type dumbbell-shaped test piece for measuring tensile strength, which was then immersed in an aqueous chlorine solution (Cl concentration: 2,000 ppm) obtained by dissolving a predetermined amount of sodium hypochloride used as a chlorine-based sterilizing agent (chlorine sterilization of tap water generally uses chlorine gas, but sodium hypochloride exhibiting the same functions as the chlorine gas is applied in the present invention) in tertiary distilled water, and allowed to stand at room temperature (23±2 °C) for 3000 hours in a darkroom. A maintenance ratio of tensile strength was calculated from the following Equation 1:

Equation 1

$$\text{Maintenance Ratio (\%)} = (\text{tensile strength of test piece after immersion/tensile strength of test piece before immersion}) \times 100$$

2) Weight decrement (%) (thermal stability)

1 g of a polyacetal resin composition was allowed to stand at 222 °C under an air atmosphere for 1 hour, and its weight decrement (%) was determined.

3) Discoloration and bubbling (chlorine resistance)

Discoloration and bubbling of a polyacetal resin composition were observed with the naked eye.

EXAMPLE 1

100 parts by weight of polyoxymethylene was added with 0.1 parts by weight of melamine, 0.1 parts by weight of magnesium hydroxide, 0.05 parts by weight of magnesium aluminate, and 0.3 parts by weight of triethyleneglycol-bis-3-(3-t-butyl-4-hydroxy-5-methylphenyl)-propionate, and extruded using a twin-screw extruder at 230 °C, to obtain a resin composition, which was then dried at 80 °C for 5 hours, followed by evaluating weight decrement, discoloration and bubbling thereof.

Further, the obtained resin composition was injection-molded at 220 °C using an injection-molding machine, to prepare a ASTM 1 type dumbbell-shaped test piece for measuring tensile strength, which was immersed in an aqueous chlorine solution for 3,000 hours, to measure a maintenance ratio of tensile strength thereof.

EXAMPLE 2

According to the same procedure as in Example 1, a resin composition was prepared by adding 100 parts by weight of polyoxymethylene with 0.1 parts by weight of melamine, 0.1 parts by weight of magnesium hydroxide, 0.1 parts by weight of magnesium aluminate, and 0.3 parts by weight of triethyleneglycol-bis-3-(3-t-butyl-4-hydroxy-5-methylphenyl)-propionate. Then, properties of the resin composition were measured by the same manner as in Example 1.

EXAMPLE 3

According to the same procedure as in Example 1, a resin composition was prepared by adding 100 parts by weight of polyoxymethylene with 0.1 parts by weight of melamine, 0.1 parts by weight of magnesium hydroxide, 0.1 parts by weight of magnesium aluminate, 0.3 parts by weight of triethyleneglycol-bis-3-(3-t-butyl-4-hydroxy-5-methylphenyl)-propionate, and 0.15 parts by weight of ethylene bis-stearamide. Then, properties of the resin composition were measured by the same manner as in Example 1.

COMPARATIVE EXAMPLE 1

According to the same procedure as in Example 1, a resin composition was prepared by adding 100 parts by weight of polyoxymethylene with 0.1 parts by weight of melamine, 0.1 parts by weight of magnesium hydroxide, and 0.3 parts by weight of triethyleneglycol-bis-3-(3-t-butyl-4-hydroxy-5-methylphenyl)-propionate. Then, properties of the resin composition were measured by the same manner as in Example 1.

COMPARATIVE EXAMPLE 2

According to the same procedure as in Example 1, a resin composition was prepared by adding 100 parts by weight of polyoxymethylene with 0.1 parts by weight of melamine, 0.1 parts by weight of zinc stearate, and 0.3 parts by weight of triethyleneglycol-bis-3-(3-t-butyl-4-hydroxy-5-methylphenyl)-propionate. Then, properties of the resin composition were measured by the same manner as in Example 1.

COMPARATIVE EXAMPLE 3

According to the same procedure as in Example 1, a resin composition was prepared by adding 100 parts by weight of polyoxymethylene with 0.1 parts by weight of melamine, 0.1 parts by weight of hydrotalcite, and 0.3 parts by weight of triethyleneglycol-bis-3-(3-t-butyl-4-hydroxy-5-methylphenyl)-propionate. Then, properties of the resin composition were measured by the same manner as in Example 1.

The measured results are shown in Table 1, below.

TABLE 1

| No. | | Tensile Strength Maintenance(%) | Weight Decrement (%) | Discoloration | Bubbling |
|---|---|---|---|---|---|
| Ex. | 1 | 97.3 | -2.3 | No | No |
| | 2 | 99,5 | -1.9 | No | No |
| * | 3 | 100 | -1.9 | No | No |
| C.Ex. | 1 | 96.8 | -2.7 | No | No |
| | 2 | 90.0 | -6.0 | Yellowing | No |
| | 3 | 85.0 | -33.7 | Yellowing | Yes |
| * example according to the invention | | | | | |

INDUSTRIAL APPLICABILITY

As described above, the polyacetal resin composition of the present invention is advantageous in terms of excellent chlorine resistance, superior thermal stability, no yellowing and no bubbling.

The present invention has been described in an illustrative manner, and it is to be understood that the terminology used is intended to be in the nature of description rather than of limitation.

## Claims

1. A polyacetal resin composition, comprising:

   100 parts by weight of a polyoxymethylene homopolymer or copolymer;
   0.01-1.0 parts by weight of an antioxidant;
   0.01-1.0 parts by weight of a thermal stabilizer;
   0.01-10.0 parts by weight of a metal hydroxide selected from the group consisting of magnesium hydroxide, calcium hydroxide, barium hydroxide, cadmium hydroxide, aluminum hydroxide and combinations thereof; and
   0.01-5.0 parts by weight of a metal oxide in a dehydrated form selected from the group consisting of synthetic aluminium silicate, calcium oxide, magnesium oxide, aluminum oxide and magnesium aluminate; and
   0.01-1.0 parts by weight of an organic additive selected from the group consisting of alkylene bis-stearamide and hot melt nylon resin.

2. The composition as defined in claim 1, wherein said metal hydroxide is magnesium hydroxide.

3. The composition as defined in claim 1, wherein said metal hydroxide is magnesium aluminate.

4. The composition as defined in claim 1, wherein said antioxidant is triethyleneglycol-bis-3-(3-t-butyl-4-hydroxy-5-methylphanyl)-propionate; 1,6-hexane-diol-bis-3(3,S-di-t-butyl-4-hydroxy-phenyl)propionate; or tetrakis[methylene (3,5-di-t-tiutyl-4-bydroxyhydroci.nnamate)]methane.

5. The composition as defined in claim 1, wherein said thermal stabilizer is 2,4,6-triamino-1,3,5-triazine.

6. A molded article of the polyacetal resin composition of any one of claims 1 to 5 for application involving a direct contact with a chlorine-based sterilizing agent or tap water containing chlorine or chlorides.

7. The molded article as defined in claim 7, wherein said molded article is bathroom fixtures, sprinklers, conveyer belt,

piping materials, containers, bib cocks, showerheads or swimming pool cleaners.

## Patentansprüche

1. Polyacetaiharzzusammensetzung, umfassend
100 Gew.-Teile eines Polyoxymethylen-Homopolymers ader-Copolymers;
0,01 bis 1,0 Gew.-Teile eines Antioxidationsmittels;
0,01 bis 1,0 Gew.-Teile eines Wärmestabilisators;
0,01 bis 10,0 Gew.-Teile eines Metallhydroxids ausgewählt aus der Gruppe bestehend aus Magnesiumhydroxid, Calciumhydroxid, Bariumhydroxid, Kadmiumhydroxid, Aluminiumhydroxid und deren Mischungen; und
0,01 bis 5,0 Gew.-Teile eines Metalloxids in dehydrierter Form, ausgewählt aus der Gruppe bestehend aus synthetischem Aluminiumsilikat, Calciumoxid, Magnesiumoxid, Aluminiumoxid und Magnesiumaluminat; und
0,01 bis 1,0 Gew.-Teile eines organischen Zusatzes, ausgewählt aus der Gruppe bestehend aus Alkylen-bis-Stearamid und Hot-melt-Nylonharz.

2. Zusammensetzung nach Anspruch 1, wobei das Metallhydroxid Magnesiumhydroxid ist.

3. Zusammensetzung nach Anspruch 1, wobei das Metallhydroxid Magnesiumaluminat ist.

4. Zusammensetzung nach Anspruch 1, wobei das Antioxidationsmittel Triethylenglycol-bis-3-(3-t-butyl-4-hydroxy-5-methylphenyl)-propionat; 1,6-Hexan-diol-bis-3-(3,5-di-t-butyl-4-hydroxy-phenyl)propionat; oder Tetrakis[methylen (3,5-di-t-butyl-4-hydroxyhydrocinnamat]methan ist.

5. Zusammensetzung nach Anspruch 1, wobei der Warmestabilisator 2,4,6-Triamino-1,3,5-triazin ist.

6. Geformter Artikel aus einer Polyacetalharzzusammensetzung nach einem der Ansprüche 1 bis 5 für eine Anwendung beinhaltend einen unmittelbaren Kontakt mit einem Chlor-basierten Sterilisierungsmittel oder Leitungswasser enthaltend Chlor oder Chloride.

7. Geformte Artikel nach Anspruch 6, wobei der geformte Artikel ist: Eine Badezimmerausstattung, ein Sprinkler, ein Transportband, ein Leitungsmaterial, ein Behälter, eln Wasserhahn, ein Duschkopf oder ein Schwimmbeckenreiniger.

## Revendications

1. Composition de résine de polyacétal, comprenant :

    100 parties en poids d'un homopolymère ou d'un copolymère de polyoxyméthylène ;
    0,01 à 1,0 partie en poids d'un antioxydant;
    0,01 à 1,0 partie en poids d'un stabilisateur thermique ;
    0,01 à 10,0 parties en poids d'un hydroxyde métallique choisi dans le groupe constitué de l'hydroxyde de magnésium, de l'hydroxyde de calcium, de l'hydroxyde de baryum, de l'hydroxyde de cadmium, de l'hydroxyde d'aluminium et de leurs combinaisons ; et
    de 0,01 à 5,0 parties en poids d'un oxyde métallique sous une forme deshydratée choisi dans le groupe constitué du silicate d'aluminium synthétique, de l'oxyde de calcium, de l'oxyde de magnésium, de l'oxyde d'aluminium et de l'aluminate de magnésium ; et
    de 0,01 à 10,0 parties en poids d'un additif organique choisi dans le groupe constitué du bis-stéaramide d'alkylène et de la résine de nylon thermofusible.

2. Composition telle que définie dans la revendication 1, dans laquelle ledit hydroxyde métallique est de l'hydroxyde de magnésium.

3. Composition telle que définie dans la revendication 1, dans laquelle l'hydroxyde métallique est de l'aluminate de magnésium.

4. Composition telle que définie dans la revendication 1, dans laquelle ledit antioxydant est le triéthylèneglycol-bis-3-(3-t-butyl-4-hydroxy-5-méthylph ényl)-propionate ;
le 1,6-hexane-diol-bis-3-(3,5-di-t-butyl-4-hydroxy-phényl) -propionate ;
ou le tétracis-[méthylène-(3,5-di-t-butyl-4-hydroxyhydrocinna mate)]méthane.

**5.** Composition telle que définie dans la revendication 1, dans laquelle ledit stabilisateur thermique est la 2,4,6-triamino-1,3,5-triazine.

**6.** Article moulé de la composition de résine de polyacétal de l'une quelconque des revendications 1 à 5 pour une application impliquant une mise en contact directe avec un agent de stérilisation à base de chlore ou de l'eau du robinet contenant du chlore ou des chlorures.

**7.** Article moulé tel que défini dans la revendication 7, dans lequel ledit article moulé est des installations de salle de bain, des gicleurs, une courroie transporteuse, des matériaux de tuyauterie, des récipients, des robinets, des pommes de douche ou des nettoyeurs de piscine.